# EUROPÄISCHE PATENTSCHRIFT

(11) **EP 2 888 508 B1**
(45) Veröffentlichungstag und Bekanntmachung des Hinweises auf die Patenterteilung: **01.02.2017**
(21) Anmeldenummer: 13755939.9
(22) Anmeldetag: 15.08.2013
(51) Int. Cl.: F16G 1/08, F16G 1/28, F16G 5/06

(54) **WÄRMEREFLEKTIERENDER KRAFTÜBERTRAGUNGSRIEMEN**
HEAT-REFLECTING FORCE TRANSMISSION BELT
COURROIE DE TRANSMISSION THERMORÉFLÉCHISSANTE

(30) Priorität: 24.08.2012 DE 102012016661
(43) Veröffentlichungstag der Anmeldung: 01.07.2015
(73) Patentinhaber: Arntz Beteiligungs GmbH & Co. KG, 37671 Höxter (DE)
(72) Erfinder: LOTZ, Florian, 37647 Brevörde (DE); OLLENBORGER, Willi, 37639 Bevern (DE)
(74) Vertreter: Lins, Martina
(86) Internationale Anmeldenummer: PCT/DE2013/000460
(87) Internationale Veröffentlichungsnummer: WO 2014/029377

(56) Entgegenhaltungen:
- EP-A1- 1 396 658
- US-A1- 2010 197 435

## Beschreibung

Die Erfindung betrifft einen Kraftübertragungsriemen mit einem Grundkörper aus wenigstens einem elastomeren Material, der einen Unterbau und einen Riemenrücken aufweist, wobei an dem Unterbau eine Kraftübertragungszone ausgebildet ist.

Die Erfindung bezieht sich auf das Gebiet der Kraftübertragungsriemen für Zugmitteltriebe. Dabei kann es sich um Flachriemen, Keilriemen, Keilrippenriemen oder Zahnriemen handeln. Riemen für Zugmitteltriebe haben generell besonderen dynamisch-mechanischen Anforderungen standzuhalten. Durch innere Scherkräfte erfahren die Riemen eine leichte Eigenerwärmung bei Betrieb, die jedoch bei modernen Elastomerriemen gut beherrschbar ist. Riemen der hier betroffenen Art werden oft in Hochleistungsmaschinen bzw. Motoren eingesetzt. Besonders in Fahrzeugmotoren für Land-, Wasser- und Luftfahrzeuge können sie dabei einer äußeren Wärmebelastung ausgesetzt werden, die durch eine hohe Betriebstemperatur des Motors und im Falle von Verbrennungsmotoren zusätzlich durch hohe Abgastemperaturen bedingt ist. Diese äußeren Bedingungen belasten das Riemenmaterial zusätzlich. Es besteht die Gefahr, dass der Riemen schneller altert und dadurch die Laufleistung verringert wird. In Kraftfahrzeugmotorräumen sind die Riemen kurzzeitig und in Intervallen hohen Temperaturen bis ca. 300 oder 400 °C ausgesetzt. Die Hochtemperaturbeständigkeit von Elastomerriemen ist daher ein konkretes Problem.

Klassisch werden derartige Kraftübertragungsriemen häufig aus Kautschukelastomeren hergestellt, und zwar vorzugsweise solchen des M-Typs oder des R-Typs, einschließlich Naturkautschuk (NR). Wegen eines guten Preis-Leistungs-Verhältnisses in Bezug auf die gewünschten mechanischen Eigenschaften sind diese Kautschuke im Stand der Technik häufig rußgefüllt.

Es ist bereits bekannt, die Temperaturbeständigkeit bei hohen und/oder niedrigen Temperaturen durch den Einsatz besonders dafür optimierter Elastomere zu verbessern, die diesen Temperaturen besser standhalten können. Aus der EP 1 129 308 A2 ist ein Kraftübertragungsriemen bekannt, der Temperaturen zwischen -40 und etwa 140 °C über wenigstens 500 Stunden standhält. Hierfür würden spezielle Copolymere eingesetzt, die Nitrilgruppen und ggf. fluorierte Vinylgruppen oder ungesättigte Carboxylsäureestergruppen enthalten. Mit der Verwendung spezieller synthetischer Elastomere zur Erhöhung der Temperaturresistenz ist der Nachteil verbunden, dass bestimmte mechanische Eigenschaften nicht gleichzeitig mit der Temperaturresistenz optimierbar sind. Auch sind diese speziellen synthetischen Elastomere in der Herstellung häufig teurer.

Aus der EP1396658 A1 ist ein Kraftübertragungsriemen gemäß dem Oberbegriff des Anspruchs 1 bekannt. Dieses Dokument offenbart eine Verwendung der plättchenförmigen Metallpartikeln in einer äußeren Beschichtung der Rippen eines Riemengrungkörpers.

Der Erfindung liegt daher die Aufgabe zugrunde, die Nachteile im Stand der Technik zu vermeiden und einen Kraftübertragungsriemen anzugeben, der gegen Überhitzung bei Betrieb in Hochleistungsmotoren, speziell in Kraftfahrzeugmotorräumen, besser geschützt ist und bei dem dennoch klassische Riemenelastomere zum Einsatz kommen können. Der Riemen soll bei den genannten Belastungen insbesondere weniger Wärmestrahlung oder Infrarot-Strahlung absorbieren als ein herkömmlicher Riemen.

Die Aufgabe wird mit Hilfe eines Kraftübertragungsriemens gemäß dem Gegenstand des Anspruchs 1 gelöst, bei dem wenigstens eine äußerste Schicht des Riemenrückens in das zugehörige Elastomer eingemischte plättchen- oder schuppenförmige Partikel aus Metall enthält. "Wenigstens in die äußerste Schicht" des Riemenrückens eingemischt bedeutet, dass die Metallteilchen entweder nur in der äußersten Schicht des Riemenrückens oder im ganzen Riemenrücken oder zusätzlich auch in anderen Riemenzonen enthalten sind. Für die Funktion wichtig ist die Anwesenheit der plättchen- oder schuppenförmigen Partikel aus Metall in der äußersten Riemenrückenschicht, um die Wärme dort unmittelbar zu reflektieren und die Wärmeabsorption durch den Riemen zu verhindern bzw. zu begrenzen. Die äußerste Schicht mit den Metallpartikeln schirmt die Wärme ab, und zwar im Wesentlichen den Infrarotstrahlungsanteil.

Die gattungsgemäßen Kraftübertragungsriemen sind generell so aufgebaut, dass der gesamte elastomere Grundkörper aus einem oder mehreren Elastomermaterialien besteht. Der Grundkörper erstreckt sich dabei weitgehend über den gesamten Querschnitt des Riemens, wobei Auflagen und/oder Beschichtungen sowohl auf der Riemenrückseite wie der Kraftübertragungszone oder als Ummantelungen um den gesamten Riemen vorhanden sein können. Zwischen dem Riemenrücken und dem Unterbau, an dem die Kraftübertragungszone ausgebildet ist, sind in der Regel Zugträger angeordnet, die in Bandform oder als Einzelstränge vorliegen können. Die Zugträger befinden sich zwischen Riemenrücken und Unterbau und können in einer eigenen Elastomermischung eingebettet sein. Bei einer solchen Ausführungsform besteht eine Zwischenschicht aus dem Zugträger-Einbettungsmaterial zwischen Riemenrücken und Unterbau. Auch der Riemenrücken kann aus mehreren Materialschichten bestehen und beispielsweise eine Zwischenschicht enthalten. In die verschiedenen Schichten oder Zwischenschichten können beispielsweise Verstärkungsfasern eingearbeitet sein, einzelne Schichten können pigmentiert sein und anderes mehr. Auch für den Unterbau sind mehrschichtige Aufbauten bekannt.

Die erfindungsgemäß vorhandenen plättchen- oder schuppenförmigen Partikel aus Metall befinden sich gemäß eines ersten Ausführungsbeispiels in dem Elastomermaterial oder den mehreren Elastomermaterialien des gesamten Grundkörpers. Die Metallpartikel sind dann in dem gesamten Querschnitt des Riemengrundkörpers verteilt, wobei die Metallpartikel-Konzentrationen in bestimmten Bereichen oder Schichten des Grundkörpers unterschiedlich und insbesondere im Riemenrücken, besonders bevorzugt in der äußersten Schicht des Riemenrückens, erhöht sein können. Alternativ ist es weiterhin möglich, dass die in das zugehörige Elastomer eingemischten plättchen- oder schuppenförmigen Partikel aus Metall nur innerhalb des Riemenrückens und bevorzugt nur innerhalb einer äußersten Schicht des Riemenrückens vorhanden sind, während andere Bereiche des Grundkörpers aus metallfreien Elastomeren gebildet werden. Diese Ausführungsform hat den Vorteil, dass die Metallpartikel nur dort eingesetzt werden, wo sie benötigt werden und wo sie optimal Wirkung entfalten. Der Materialeinsatz an Metall ist gegenüber dem ersten Beispiel reduziert.

Bei den plättchen- oder schuppenförmigen Partikeln aus Metall kann es sich um sogenannte Flakes handeln, auch als Flocken bezeichnet. Diese Flakes bzw. Schuppen oder Plättchen können auf verschiedene Weise hergestellt werden. Zum einen können Sie aus einem Spanprozess stammen. Die Plättchen oder Schuppen sind dann Flachspäne. Auch Schliffbronzen gehören in diese Gruppe. In einem anderen Herstellungsverfahren wird Metall zu Gries zerkleinert bzw. pulverisiert und dann in Mühlen verformt und ggf. weiter zerkleinert. Hierfür sind Trockenmahlverfahren und Nassmahlverfahren bekannt. Es ergeben sich Plättchen bzw. Blättchen oder Flakes, die häufig eine Dicke von nur ca. einem Mikrometer bei Durchmessern von ca. 20 bis 100 µm (D50ₙᵤₘ ≤ 100 µm oder Siebdurchgang ca. 70 - 80) besitzen.

Die erfindungsgemäßen Metallpartikel bestehen aus elementaren Metallen oder Metalllegierungen, d.h. keinen Metalloxiden. Sie können jedoch zum Korrosionsschutz und Zwecks besserer Einbindung in ein Elastomer beschichtet sein, vorzugsweise sind die Metallpartikel nichtleitend beschichtet, weiter vor-zugsweise mit Siliciumdioxid, Aluminumoxid oder mit Polymeren, wie beispielsweise Acrylaten. Die Beschichtung mit SiO₂ kann eine Glaseinkapselung sein. Die Einkapselung oder Beschichtung dient in erster Linie dem Korrosionsschutz; eine oxidische Beschichtung kann die Einbindung in das Elastomer verbessern.

Die erfindungsgemäßen Metallpartikel bestehen vorzugsweise aus Gold, Kup-fer, Zink, Bronze oder Messing und in besonders bevorzugter Ausführungsform aus Aluminium. Aluminium ist bevorzugt, weil es Infrarotstrahlung sehr gut reflektiert.

Aluminiumpartikel der hier bevorzugten Art sind als technische Aluminiumflakes bekannt. Aluminiumflakes werden als Schäumungsmittel bei der Herstellung von Leichtbeton und Spezialmörteln verwendet, ebenso in der chemischen Industrie, insbesondere für Grignard-Reaktionen und stark exothermen metallorganischen Reaktionen verschiedener Art. Sie werden ebenfalls als Reduktionsmittel eingesetzt und finden Anwendung in vielen pyrotechnischen Produkten.

Überraschenderweise wurde gefunden, dass diese Partikel gefahrlos in Kraftübertragungsriemen für Fahrzeugmotoren eingesetzt werden können, da sie in den Elastomeren dispergiert und damit geschützt vorliegen.

Bezüglich der Teilchenform unterscheidet man bei den Metallflakes die sogenannte "Cornflakes-Form", eine unregelmäßige Form, und die sogenannten "Silberdollar-Typen" mit einer glatten Oberfläche. Die genaue Form der Flakes bzw. Plättchen oder Schuppen scheint keinen entscheidenden Einfluss auf die wärmereflektierenden Eigenschaften zu besitzen. Die Plättchenform als solche ist in Verbindung mit Konzentration und Größe (Durchmesser) für die Wirkung ausschlaggebend.

Gemäß der vorliegenden Erfindung sind die Metallpartikel in dem Elastomer des metallhaltigen Grundkörpers oder Grundkörperbereichs insgesamt und vorzugsweise in der äußersten Schicht des Riemenrückens in einer Konzentra-tion von 1 phr bis 25 phr, vorzugsweise von 5 phr bis 12 phr, vorhanden.

Weiterhin sind wenigstens 50 % der Teilchen in keiner Ausdehnungsausrichtung länger als 100 µm, vorzugsweise in keiner Ausdehnungsrichtung länger als 60 µm. Dies entspricht einer beispielsweise durch Laserdiffraktometrie bestimmten mittleren Partikelgröße (numerisch) von D50ₙᵤₘ≤ 100 µm, vorzugsweise D50ₙᵤₘ ≤ 60 µm. Alternativ kann die Beschränkung der Teilchengröße auch durch eine Siebdurchgangskennzahl charakterisiert werden. Vorzugsweise besitzen die verwendeten Teilchen eine Siebdurchgangszahl von nicht größer als 71 (95 - 100 % Durchgang). Bei zu großen Teilchen nimmt die Rissneigung im Riemenmaterial zu, sodass es zum Riemenausfall oder einer deutlichen Verminderung der Laufleistung kommen kann. Überraschenderweise wurde gefunden, dass die in wenigstens der äußersten Riemenrückenschicht gleichmäßig dispergierten Metallpartikel eine erstaunlich gute Wärmereflexion bewirken, die höher ist als bei einem "weiß"-gefüllten Riemenmaterial, das SiO₂- und/oder TiO₂-basierte Füllstoffe enthält.

Die Wärmereflexion ist bei den erfindungsgemäß eingesetzten plättchen- oder schuppenförmigen Metallpartikeln erheblich besser als bei Metallpulver, bezogen auf die gleiche Masse. Dieser Effekt tritt bereits unabhängig von einer gezielten Ausrichtung der Plättchen oder Schuppen im Elastomer ein. Es wird aber davon ausgegangen, dass eine gewisse Ausrichtung der Metallteilchen bei der Herstellung des Riemens bzw. Riemenrückens automatisch erfolgt. Insbesondere beim Kalandrieren des Riemenrückens werden sich die Plättchen "flach", d.h. bevorzugt eher parallel und nicht quer zur Schichtfläche, anordnen. Eine ähnliche Ausrichtung kommt auch beim Gießen einer plättchenhaltigen oder schuppenhaltigen Schicht zustande, in besonders starkem Maße, wenn die äußerste Schicht mit den Metallteilchen sehr dünn, beispielsweise kleiner 1 mm, ist.

In bevorzugter Ausführungsform enthält nur die äußerste Schicht des Riemenrückens die erfindungsgemäßen Metallpartikel. Diese Schicht ist vorzugsweise bis zu 1 mm, weiter vorzugsweise bis zu 0,5 mm und besonders bevorzugt nur bis zu 0,2 mm (≤ 0,2 mm) dick.

Die erhöhte Wärmereflexion schützt den Riemen vor Überhitzung und macht es möglich, dass auf hochtemperaturstabile Elastomere, beispielsweise mit fluoriertem Anteil, zugunsten der konventionellen Elastomere, die jedoch wenigstens in der äußersten Schicht des Riemenrückens mit Metallpartikeln versehen sind, verzichtet werden kann.

Gemäß der vorliegenden Erfindung ist das die Metallpartikel enthaltende Elastomer ein M-Elastomer, ein R-Elastomer, einschließlich Naturkautschuk (NR), ein Halogen-kautschuk oder ein Polyurethan. Es können mehrere in dem Riemen in ver-schiedenen räumlichen Bereichen (Zonen) angeordnete Elastomere plättchen- oder schuppenförmige Partikel aus Metall enthalten. Grundsätzlich sind alle Kautschuke, einschließlich Naturkautschuk, geeignet, um bei der Erfindung verwendet zu werden.

In anderen bevorzugten Ausführungsformen ist das bevorzugte Elastomer, das die erfindungsgemäßen Metallpartikel enthält, zu wenigstens 50 Gew.% ein Elastomer der M-Gruppe oder ein Polyurethan. Besonders bevorzugte Elasto-mere sind radikalisch vernetzte EPM- oder EPDM-Elastomere.

Unter einem "Elastomer" wird hier ein zu einem dreidimensionalen Netzwerk vernetztes Polymer verstanden, das keine rein thermoplastischen Eigenschaften, wie Schmelzbarkeit, besitzt. Gewisse Anteile an Thermoplasten können eingemischt sein, ohne dass das Elastomer insgesamt seine charakteristischen Elastomereigenschaften verliert. Der Thermoplastanteil sollte jedoch 30 Gew.%, vorzugsweise 20 Gew.%, nicht überschreiten.

Das Elastomer enthält weiterhin einen vorzugsweise hellen Füllstoff, insbesondere ein Kieselsäurematerial oder ein disperses Siliciumoxid, vorzugsweise pyrogenes Siliciumdioxid in nicht-funktionalisierter und vorzugsweise in funktionalisierter Form. Kieselsäurebasierte Füllstoffe sind in "Ullmann's Encyklopedia of Industrial Chemistry, VCH, Weinheim 1993, Vol. A 23, Seite 395 ff. unter dem Thema "Aktive weiße Füllstoffe" beschrieben (Kapitel "Rubber, 4.3.3.1.").

Es ist bevorzugt, wenn ca. 10 bis 90 phr eines solchen Füllstoffs verwendet werden. Die Oberfläche gemessen nach BET sollte größer oder gleich 50 m²/g betragen. Der Füllstoff oder Teile des Füllstoffs können oberflächenfunktionalisiert sein, wie dies im Stand der Technik bekannt ist.

Weiterhin ist es bevorzugt, dass das Elastomer des Riemenkörpers insgesamt oder zumindest das Elastomer, in das die Metallpartikel nach der Erfindung eingebettet sind, keine dunklen Füllstoffe und insbesondere keinen Ruß enthält. Dunkle Füllstoffe bzw. Ruß wirken der wärmereflektierenden Wirkung der Metallpartikel entgegen und sind daher zu vermeiden.

Wie im Stand der Technik allgemein bekannt, können die Elastomermischungen weiterhin Zusatz- und Hilfsstoffe in den dafür üblichen Gewichtsanteilen enthalten. Hierzu gehören Weichmacher, Dispergiermittel, Mastiziermittel, Haftvermittler, Alterungsschutzmittel, Trennmittel, Gleitmittel, Stabilisatoren, Vernetzungsbeschleuniger, Vernetzungsverzögerer, Farbstoffe (vorzugsweise helle), Verstärkungsfasern, Vernetzungsinitiatoren, wie insbesondere Radikalbildner, und Aktivatoren.

Die Kraftübertragungsriemen nach der Erfindung können alle gängigen Formen besitzen, d.h. es kann sich grundsätzlich um Flachriemen, Keilriemen oder Zahnriemen, handeln. Bevorzugt sind Keilriemen, Keilriemenkraftbändern, Keilrippenriemen und Zahnriemen, besonders bevorzugt sind Keilriemen und Keilrippenriemen.

Da der Erfindung die Erkenntnis zugrunde liegt, dass Kraftübertragungsriemen aus herkömmlichen Kautschukelastomeren oder Polyurethan bei Betrieb unter thermischer Belastung, insbesondere kurzfristiger wiederkehrender thermischer Belastung bei Temperaturen bis ca. 400 °C wirkungsvoll mit Hilfe von eingebetteten Metallteilchen geschützt werden können, umfasst die Erfindung weiterhin die Verwendung von Metallpartikeln innerhalb des Riemenrückens eines Kraftübertragungsriemens zum Überhitzungsschutz für kurzzeitig in Fahrzeugmotorräumen und im Wärmeabstrahlungsbereich von Auspuffanlagen auftretende Temperaturen oberhalb 100 °C, ggf. oberhalb 200 °C und kurzzeitig bis etwa 400 °C.

Besonders bevorzugt ist die Verwendung von technischen Aluminiumschuppen, auch bezeichnet als Aluminiumflakes, von Aluminiumplättchen, Aluminiumflachspänen Aluminiumschuppen oder Schliffbronze mit Teilchendurchmessern ≤ 100 µm, d.h. mit einem Siebdurchgang 100, vorzugsweise einem Siebdurchgang 71, weiter vorzugsweise einem mittleren Teilchendurchmesser D50ₙᵤₘ ≤ 100. Die erfindungsgemäße Verwendung erfolgt im Einzelnen so, wie zuvor anhand des erfindungsgemäßen Kraftübertragungsriemens beschrieben.

Im Folgenden wird die Erfindung anhand von Ausführungsbeispielen näher erläutert, wobei auf die beigefügten Zeichnungen Bezug genommen wird.

In der Zeichnung zeigen:
- Abbildung 1: - skizzierte Riemenquerschnitte;
- Abb. 1a: - einen skizzierten Querschnitt eines Rippenbandes mit Metallteilchen in der äußersten Riemenrückenschicht;
- Abb. 1b: - einen skizzierten Querschnitt eines Keilriemens mit Metallpartikeln auf der Textilbeschichtung;
- Abbildung 2: - Testaufbau, Wärmereflexionstest.

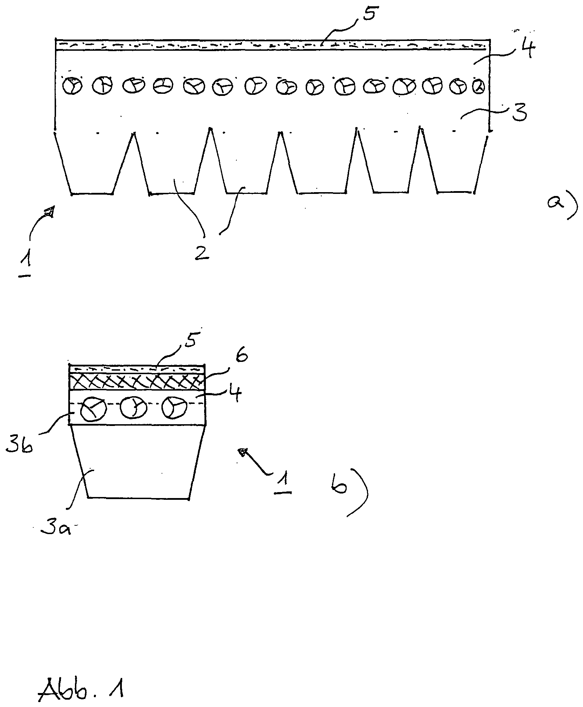

Abbildung 1a zeigt die schematische Darstellung eines Riemenquerschnitts durch einen Kraftübertragungsriemen **1** in Form eines Keilrippenriemens mit hier sechs Rippen **2**. Der elastomere Grundkörper **3** umfasst die aus einem einheitlichen elastomeren Material gebildeten Rippen **2**, sowie den gesamten Unterbau und den Riemenrücken 4. Nur die äußerste Schicht **5** des Riemenrückens **4** enthält in das Elastomer eingemischte plättchenförmige Partikel aus Metall, hier Aluminumflakes ("blättchenförmiges Aluminiumpulver", Hersteller: Eckart Effect Pigments, Deutschland) mit Siebdurchgang (97 - 100 %) 71 Mikrometer und einer Teilchengrößeverteilung D50 von ca. 47 Mikrometer. Die Schichtdicke der Schicht 5 beträgt 1 mm. Durch Kalandrieren sind die Aluminiumflakes nicht völlig ungeordnet, sondern statistisch in höherem Maße längs zur Schicht ausgerichtet.

Abbildung 1b zeigt als weiteres Ausführungsbeispiel die schematische Darstellung eines Riemenquerschnitts durch einen Kraftübertragungsriemen **1** in Form eines Keilriemens. Der Keilriemen **1** ist hier aus verschiedenen Elastomerbereichen gebildet, nämlich einem Elastomerbereich im Keilabschnitt **3a**, einem Cordeinbettungsabschnitt **3b** und der äußersten Schicht **5,** die wiederum die blättchen- bzw. plättchenförmigen Aluminiumflakes enthält. Der Riemenrücken **4,** der aus dem gleichen Elastomer wie die Cordeinbettungsschicht **3b** ausgebildet ist, ist mit einer Textilauflage **6** abgedeckt. Die äußerste Schicht **5** des Riemenrückens **4** ist also hier als eine Beschichtung der Textilauflage **6** ausgebildet. Alternativ kann die Textilauflage **6** mit dem metallpartikelhaltigen Elastomermaterial für die äußerste Schicht **5** vollständig getränkt sein.

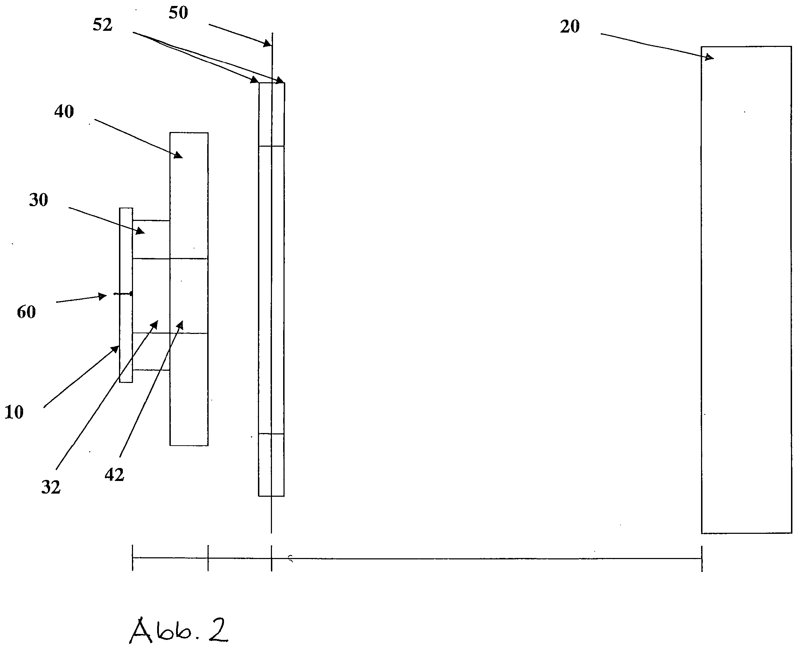

Abbildung 2 zeigt eine schematische Darstellung der Testapparatur, mit der Probestücke aus Elastomermaterialien mit eingebetteten Teilchen zur Wärmereflexion untersucht wurden.

### Beispiele

### 1.) Beispielgrundmischung

### Mischung 1

| **Bestandteil** | **Gehalt (phr)** |
|---|---|
| EPDM1: Ethylen-Propylen-Dien-Terpolymer, Ethylengehalt 50 %, Diengehalt* 4,9 % | 55 |
| EPDM2: Ethylen-Propylen-Dien-Terpolymer, Ethylengehalt 70 %, Diengehalt 4,9 % | 45 |
| Silica-Silan-Zusammensetzung: VN2 + VTEo** | 50 |
| Weichmacher: Mineralöl-Weichmacher | 12 |
| TMQ Antioxidanz 2,2,4-Trimethyl-1,2-dihydrochinolin | 0,5 |
| Stearinsäure | 4 |
| ZnO | 2 |
| MgO | 4 |
| Ionischer Aktivator: Zink-Dimethacrylat | 12 |
| Peroxid-Vernetzer: Di(t-butylperoxy-isopropyl)benzol | 4 |

| | |
|---|---|
| *Dien = ENB ** VN2 + VTEo = ein VN2-Silica-Füllstoff (spez. Oberfl. BET: 125 - 130 m²/g, vorreagiert bzw. vorvermischt mit 8 phf Vinyltriethoxysilan | |

2.) Einzelbeispiele mit unterschiedlichen erfindungsgemäßen und nicht er-findungsgemäßen Teilchen zur Erhöhung der Wärmereflexion, für die Beispiele b) bis g) mit der Grundmischung und zusätzlich dem angegebenen Gehalt an Wärmeschutzteilchen in phr. Als Referenzbeispiel a) wird ein entsprechender rußgefüllter Kautschuk verwendet.

| **Beispiel** | **Teilchenart** | **Eigenschaften** | **ΔT (°C)** |
|---|---|---|---|
| a) Referenzbeispiel | Ruß, EPDM-Standardqualität, peroxidvernetzt, ohne Fasern | rußgefülltes EPM, Standardriemenkautschuk, ohne Wärmereflexionsteilchen | 0 (Referenz) |
| b) einzelne und gemischte Metalloxide | Al₂O₃ oder TiO₂, SiO₂, Gemische daraus, jeweils 10 phr | Durchmesser ca. 40 - 50 µm | 12 |
| c) Zinn | pulverförmig, 10 phr | - | 18 |
| d) Aluminiumpulver | Standardpulver, 10 phr | Siebdurchgang 71 µm | 26 |
| e) beschichtetes Aluminium, Pulver | Al, SiO₂-beschichtet, 5 phr | runde Teilchen, mittlerer Durchmesser, 50 µm | 26 |
| f) beschichtetes Aluminium, Pulver | Al, SiO₂-beschichtet, 10 phr | runde Teilchen, mittlerer Durchmesser, 50 µm | 32 |
| g) Aluminiumflakes (Blättchen) | Al, gekapselt mit mineralischer Schicht, 10 phr | D50ₙᵤₘ ≤ 50 µm, runde Plättchen | 39 |

### Wärmereflexionstest - Abb. 2

Aus den Materialien zu oben genannten Beispielen a) bis g) wurden jeweils Platten **10** ausgeformt, die in definiertem Abstand zu einer Heizplatte **20** angeordnet wurden. Die Platten **10** aus dem Probematerial besaßen jeweils eine Schichtdicke von 2 mm. Der Abstand von der Oberfläche der jeweiligen Platte **10** bis zur Oberfläche der Heizplatte **20** betrug in dem Versuchsaufbau 92 mm. Innerhalb dieses Aufbaus wurden verschiedene Maßnahmen ergriffen, um den Einfluss einer Konvektionswärme weitgehend auszuschließen. Hierzu wurde die Platte **10** aus dem Probematerial auf einen ringförmigen Abstandshalter **30** aus Gummi mit der Schichtdicke 6 mm geklebt. Der Innendurchmesser **32** des Rings betrug 35 mm. Vor dem Gummiabstandshalter **30** wurde eine 6 mm starke HDF-Platte **40** mit einer Mittelbohrung **42** angeordnet. Die HDF-Oberfläche wurde vollständig mit Alufolie bedeckt. Die Mittelbohrung **42** mit einem Durchmesser von ebenfalls 35 mm wurde deckungsgleich mit der Öffnung des Abstandshalters **30** angeordnet, sodass die von der Heizplatte **20** ausgehende Wärmestrahlung - im Wesentlichen eine Infrarotstrahlung - nur im Bereich der Mittelbohrungen auf die Platte **10** treffen konnte. Als zusätzliche Maßnahme zur Abschirmung der Wärmekonvektion wurde zwischen Heizplatte **20** und HDF-Platte **40** noch eine Zellophanfolie **50** angeordnet, die durch den Metallrahmen **52** gehaltert wurde. Bei der Zellophanfolie handelte es sich um eine Natureflex NP-Folie, Schichtdicke 0,2 mm, die in einem Abstand von 10 mm von der heizplattenseitigen Oberfläche der HDF-Platte bzw. von 22 mm von der Oberfläche des Probenmaterials beabstandet war. Der Abstand zwischen Heizplatte **20** und Zellophanfolie **50** betrug demnach 70 mm. Die Aufheizung des Probenmaterials durch die Wärmestrahlung der Heizplatte **20** wurde mit Hilfe eines Temperaturfühlers **60** aufgezeichnet. Der Temperaturfühler **60** war hierfür in der der Strahlung zugewandten Vorderseite der Probeplatte **10** versenkt angeordnet.

Der Testaufbau dient der Simulation einer Motorraumsituation. Dabei kann eine Auspuffanlage - hier durch die im Abstand angeordnete Heizplatte **20** dargestellt - Temperaturen bis ca. 500 °C annehmen. Die Heizplatte 20 wurde auf 500 °C aufgeheizt. Die mit dem Wärmefühler **60** gemessene Temperatur der Platte **10** näherte sich dabei über ca. 13 bis 15 Minuten asymptotisch einem Endwert, der bei Erreichen der Temperaturkonstanz (Temperaturänderung nach 1 Minute kleiner 0,1 °C) aufgezeichnet wurde. Dieser Testablauf wurde für alle Beispielmaterialien mehrfach wiederholt, und es wurde für jedes Material der Mittelwert genommen. Der Temperaturmittelwert des rußgefüllten Elastomers wurde als Referenz gleich Null gesetzt. Die ΔT-Werte des Beispielteils geben die Temperaturdifferenz zwischen den Temperaturendwerten beim Referenzmaterial und dem jeweiligen Beispielmaterial an, wobei diese Temperaturdifferenz stets negativ war, d.h. die Probematerialien b) bis g) heizten sich weniger auf als das Referenzmaterial. Dabei zeigte sich, dass die Anwesenheit von Metallteilchen bereits einen positiven Effekt bewirkt, der bei Verwendung entsprechender plättchen- oder schuppenförmiger Teilchen, sogenannter Flakes, nochmals um bis zu 50 % gesteigert werden konnte. Das Vorhandensein der Metallflakes bewirkte eine deutlich verstärkte Wärmereflexion, sodass ein auf diese Weise ausgerüsteter Riemen bei Betrieb unter erhöhter Temperatur besser gegen Überhitzung geschützt ist.

## Patentansprüche

1. Kraftübertragungsriemen (1) mit einem Grundkörper (3) aus wenigstens einem elastomeren Material, der einen Unterbau und einen Riemenrücken (4) aufweist, wobei an dem Unterbau eine Kraftübertragungszone ausgebildet ist und wobei der ganze Riemenrücken (4) oder wenigstens eine äußerste Schicht (5) des Riemenrückens (4) in das Elastomer eingemischte Partikel aus Metall enthält, wobei
die eingemischten Metallpartikel plättchen- oder schuppenförmige Partikel sind, **dadurch gekennzeichnet, dass** die Metallpartikeln in einer Konzentration von 1 phr bis 25 phr vorhanden sind und von denen wenigstens 50 % in keiner Ausdehnungsrichtung länger als 100 Mikrometer sind und dass das die Metallpartikel enthaltene Elastomer ein M-Elastomer, ein R-Elastomer, einschließlich Naturkautschuk (NR) oder ein Polyurethan ist.

2. Kraftübertragungsriemen (1) nach Anspruch 1, **dadurch gekennzeichnet, dass** die Metallpartikel aus Aluminium bestehen.

3. Kraftübertragungsriemen (1) nach Anspruch 1 oder 2, **dadurch gekennzeichnet, dass** wenigstens 50 % der Teilchen in keiner Ausdehnungsrichtung länger als 60 Mikrometer sind.

4. Kraftübertragungsriemen (1) nach einem der Ansprüche 1 bis 3, **dadurch gekennzeichnet, dass** die Metallpartikel in dem Elastomer des Riemenrückens (4) oder der äußeren Schicht (5) des Riemenrückens (4) in einer Konzentration von 1 phr bis 12 phr vorhanden sind.

5. Kraftübertragungsriemen (1) nach einem der Ansprüche 1 bis 3, **dadurch gekennzeichnet, dass** die Metallpartikel in dem Elastomer des Riemenrückens (4) oder der äußeren Schicht (5) des Riemenrückens (4) in einer Konzentration von 1 phr bis unter 5 phr vorhanden sind.

6. Kraftübertragungsriemen (1) nach einem der Ansprüche 1 bis 5, **dadurch gekennzeichnet, dass** das Elastomer des Riemenrückens (4) oder zumindest das Elastomer der äußersten Schicht (5) des Riemenrückens (4) einen hellen Füllstoff, insbesondere einen SiO₂-haltigen Füllstoff enthält.

7. Kraftübertragungsriemen (1) nach einem der Ansprüche 1 bis 6, **dadurch gekennzeichnet, dass** das Elastomer des Riemenrückens (4) oder zumindest das Elastomer der äußersten Schicht (5) des Riemenrückens (4) nicht dunkel eingefärbt und nicht mit dunkelen Füllstoffen oder mit Ruß gefüllt ist.

8. Kraftübertragungsriemen (1) nach einem der Ansprüche 1 bis 7, **dadurch gekennzeichnet, dass** die metallpartikelhaltige äußerste Schicht (5) des Riemenrückens (4) bis zu 1 mm dick ist.

9. Kraftübertragungsriemen (1) nach einem der Ansprüche 1 bis 8, **dadurch gekennzeichnet, dass** der Riemen ein Keilriemen, ein Keilriemenkraftband, ein Keilrippenriemen oder ein Zahnriemen ist.

10. Verwendung plättchen- oder schuppenförmiger Metallpartikel, von denen wenigstens 50 % in keiner Ausdehnungsrichtung länger als 100 Mikrometer sind, in einer Konzentration von 1 bis 25 phr innerhalb des Riemenrückens (4) und wenigstens in einer äußeren Schicht (5) des Riemenrückens (4) eines Kraftübertragungsriemens (1) zum Überhitzungsschutz gegen kurzzeitig beim Betrieb in Fahrzeugmotorräumen und im Wärmeabstrahlungsbereich von Auspuffanlagen auftretenden Temperaturen > 100 °C.

11. Verwendung nach Anspruch 10, **dadurch gekennzeichnet, dass** die Metallpartikel technische Aluminiumschuppen mit Durchmessern kleiner gleich 100 Mikrometer sind.

## Claims

1. Force-transmission belt (1) with a belt body (3) which is made of at least one elastomeric material and which comprises an underside and comprises a belt backing (4), where there is, associated with the underside , a force-transmission zone, and where the entire belt backing (4) or at least one outermost layer (5) of the belt backing (4) comprises metal particles mixed into the elastomer, where the metal particles mixed into the material are particles in platelet form or in flake form, **characterized in that** the metal particles are present at a concentration of from 1 phr to 25 phr and at least 50% of said particles do not have a length exceeding 100 micrometers in any measurement direction and **in that** the elastomer comprising the metal particles is an M elastomer or an R elastomer, inclusive of natural rubber (NR), or is a polyurethane.

2. Force-transmission belt (1) according to Claim 1, **characterized in that** the metal particles are composed of aluminum.

3. Force-transmission belt (1) according to Claim 1 or 2, **characterized in that** at least 50% of the particles do not have a length exceeding 60 micrometers in any measurement direction.

4. Force-transmission belt (1) according to any of Claims 1 to 3, **characterized in that** the metal particles are present in the elastomer of the belt backing (4) or of the outer layer (5) of the belt backing (4) at a concentration of from 1 phr to 12 phr.

5. Force-transmission belt (1) according to any of Claims 1 to 3, **characterized in that** the metal particles are present in the elastomer of the belt backing (4) or of the outer layer (5) of the belt backing (4) at a concentration of from 1 phr to less than 5 phr.

6. Force-transmission belt (1) according to any of Claims 1 to 5, **characterized in that** the elastomer of the belt backing (4) or at least the elastomer of the outermost layer (5) of the belt backing (4) comprises a pale-colored filler, in particular an SiO₂-containing filler.

7. Force-transmission belt (1) according to any of Claims 1 to 6, **characterized in that** the elastomer of the belt backing (4) or at least the elastomer of the outermost layer (5) of the belt backing (4) is not of dark color and has not been filled with dark-colored fillers or with carbon black.

8. Force-transmission belt (1) according to any of Claims 1 to 7, **characterized in that** the thickness of the metal-particle-containing outermost layer (5) of the belt backing (4) is up to 1 mm.

9. Force-transmission belt (1) according to any of Claims 1 to 8, **characterized in that** the belt is a V-belt, a V-ribbed belt, a toothed belt, or a belt comprising a plurality of V-belts.

10. Use of metal particles in platelet form or in flake form, of which at least 50% do not have a length exceeding 100 micrometers in any measurement direction, at a concentration of from 1 to 25 phr within the belt backing (4) and at least in an outer layer (5) of the belt backing (4) of a force-transmission belt (1) for protection from overheating in respect of temperatures > 100°C which arise briefly during operation in vehicle engine compartments and in the heat-emission region of exhaust systems.

11. Use according to Claim 10, **characterized in that** the metal particles are technical-grade aluminum flakes with diameters smaller than or equal to 100 micrometers.

## Revendications

1. Courroie (1) de transmission de force présentant un corps de base (3) en au moins un matériau élastomère, qui présente une sous-structure et un dos (4) de courroie, une zone de transmission de force étant réalisée au niveau de la sous-structure et la totalité du dos (4) de courroie ou au moins une couche externe (5) du dos (4) de courroie contenant des particules en métal incorporées dans l'élastomère, les particules métalliques incorporées étant des particules sous forme de plaquettes ou d'écailles, **caractérisée en ce que** les particules métalliques sont présentes en une concentration de 1 pce (partie pour cents parties d'élastomère) à 25 pce et au moins 50% de celles-ci, dans aucune direction d'extension, n'étant pas plus longues que 100 µm et **en ce que** l'élastomère contenant les particules métalliques est un élastomère M, un élastomère R, y compris le caoutchouc naturel (NR) ou un polyuréthane.

2. Courroie (1) de transmission de force selon la revendication 1, **caractérisée en ce que** les particules métalliques sont en aluminium.

3. Courroie (1) de transmission de force selon la revendication 1 ou 2, **caractérisée en ce qu'**au moins 50% des particules, dans aucune direction d'extension, ne sont pas plus longues que 60 µm.

4. Courroie (1) de transmission de force selon l'une quelconque des revendications 1 à 3, **caractérisée en ce que** les particules métalliques dans l'élastomère du dos (4) de courroie ou de la couche externe (5) du dos (4) de courroie sont présentes en une concentration de 1 pce à 12 pce.

5. Courroie (1) de transmission de force selon l'une quelconque des revendications 1 à 3, **caractérisée en ce que** les particules métalliques dans l'élastomère du dos (4) de courroie ou de la couche externe (5) du dos (4) de courroie sont présentes en une concentration de 1 pce à 5 pce.

6. Courroie (1) de transmission de force selon l'une quelconque des revendications 1 à 5, **caractérisée en ce que** élastomère du dos (4) de courroie ou au moins l'élastomère de la couche externe (5) du dos (4) de courroie contient une charge claire, en particulier une charge contenant SiO₂.

7. Courroie (1) de transmission de force selon l'une quelconque des revendications 1 à 6, **caractérisée en ce que** élastomère du dos (4) de courroie ou au moins l'élastomère de la couche externe (5) du dos (4) de courroie n'est pas coloré de manière foncée et n'est pas chargé de charges foncées ou de suie.

8. Courroie (1) de transmission de force selon l'une quelconque des revendications 1 à 7, **caractérisée en ce que** la couche externe (5) contenant des particules métalliques du dos (4) de courroie présente une épaisseur de jusqu'à 1 mm.

9. Courroie (1) de transmission de force selon l'une quelconque des revendications 1 à 8, **caractérisée en ce que** la courroie est une courroie trapézoïdale, une courroie trapézoïdale de transmission, une courroie trapézoïdale à nervures ou une courroie dentée.

10. Utilisation de particules métalliques sous forme de plaquettes ou d'écailles, dont au moins 50%, dans aucune direction d'extension, ne sont pas plus longues que 100 µm, en une concentration de 1 à 25 pce dans le dos (4) de courroie et au moins dans une couche externe (5) du dos (4) de courroie d'une courroie (1) de transmission de force pour la protection contre la surchauffe, contre des températures > 100°C qui existent pendant un court moment lors du fonctionnement dans le compartiment moteur de véhicule ou dans la zone de rayonnement thermique de lignes d'échappement.

11. Utilisation selon la revendication 10, **caractérisée en ce que** les particules métalliques sont des écailles d'aluminium de qualité technique présentant des diamètres inférieurs à 100 µm.
